# EUROPÄISCHE PATENTSCHRIFT

(11) **EP 3 838 527 B1**
(45) Veröffentlichungstag und Bekanntmachung des Hinweises auf die Patenterteilung: **23.08.2023**
(21) Anmeldenummer: 20210535.9
(22) Anmeldetag: 30.11.2020
(51) Int. Cl.: B27G 19/04, B27B 5/26, B27G 19/02, B27B 5/24, B23D 45/06

(54) **SCHUTZVORRICHTUNG, SÄGEMASCHINE UND SCHUTZVERFAHREN**
PROTECTION DEVICE, SAWING MACHINE AND PROTECTION METHOD
DISPOSITIF DE PROTECTION, MACHINE DE SCIAGE ET PROCÉDÉ DE PROTECTION

(30) Priorität: 20.12.2019 DE 202019107145 U
(43) Veröffentlichungstag der Anmeldung: 23.06.2021
(73) Patentinhaber: Otto Martin Maschinenbau GmbH & Co. KG, 87724 Ottobeuren (DE)
(72) Erfinder: Pietzsch, Stephan, 87742 Dirlewang (DE)
(74) Vertreter: ERNICKE Patent- und Rechtsanwälte PartmbB

(56) Entgegenhaltungen:
- EP-A1- 2 366 515
- AT-A1- 501 316
- DE-A1-102006 014 647
- DE-U1- 20 103 373

## Beschreibung

Die Erfindung betrifft eine Schutzvorrichtung und ein Schutzverfahren für Sägeblätter.

Eine Schutzvorrichtung gemäß dem Oberbegriff des Anspruchs 1 und ein Schutzverfahren gemäß dem Oberbegriff des Anspruchs 14 sind aus Dokument DE 10 2006 014647 A1 bekannt.

Aus der DE 10 2016 004 255 A1 ist eine Formatkreissäge mit einem beidseits schwenkbaren Sägeblatt und einer Schutzvorrichtung mit einer das Sägeblatt in Betriebsstellung abdeckenden Schutzhaube bekannt. Die Schutzvorrichtung weist eine Stellvorrichtung auf, mit der die Schutzhaube in einer Richtung quer zur Schnittlinie bzw. zum Austrittsschlitz des Sägeblatts an der Sägemaschine linear verschoben werden kann. Die Verstellung erfolgt zwischen zwei definierten Endpositionen, um das Sägeblatt in den beidseitigen maximalen Schwenklagen aufnehmen zu können. Für Zwischenlagen des Sägeblatts mit kleinerem Schwenkwinkel nimmt die Sägeschutzhaube ebenfalls eine der Endpositionen ein.

Die EP 1 902 822 A1 und EP 2 366 515 A1 zeigen ebenfalls eine Formatkreissäge mit einem beidseits schwenkbaren Sägeblatt und einer verstellbaren Schutzhaube für das Sägeblatt.

Die FR 2 975 624 A befasst sich mit einem Schwenkmechanismus für das Verschwenken einer Schutzhaube entsprechend einer Schwenkstellung des Sägeblatts einer Sägemaschine. Die Schutzhaube wird erst nach Verstellung des Sägeblatts von Hand im gleichen Winkel wie das geschwenkte Sägeblatt verstellt und dabei aus einer Höhenlage bei der Schwenkverstellung in eine Abdeckstellung über dem Sägeblatt abgeschwenkt.

Die AT 501 316 A1 betrifft eine Aufteilsäge, bei der das Sägeaggregat mit einem Laufwagen entlang eines ruhenden Werkstücks bewegt wird, welches am Maschinengestell mittels eines U-förmigen und stirnseitig offenen Druckbalkens stationär festgespannt ist. Das Sägeblatt kann in der Höhe und im Schwenkwinkel verstellt werden. Bei dem starr positionierten und in seiner Innenweite verstellbaren Druckbalken wird zur Anpassung an unterschiedliche Schwenkwinkel des Sägeblatts ein internes Stegprofil verschwenkt oder eine Seitenwand des Druckbalkens seitlich verschoben.

Es ist Aufgabe der vorliegenden Erfindung, eine verbesserte Schutztechnik für das Sägeblatt aufzuzeigen.

Die Erfindung löst diese Aufgabe mit den Merkmalen in den selbstständigen Ansprüchen.

Die beanspruchte Schutztechnik, d.h. die Schutzvorrichtung und das Schutzverfahren sowie die damit ausgerüstete Sägemaschine, haben verschiedene Vorteile.

Die beanspruchte Schutztechnik kann bei der Erstausrüstung an einer Sägemaschine implementiert werden. Sie kann auch bei einer vorhandenen Sägemaschine nachgerüstet oder umgerüstet werden.

Die Sägemaschine kann als Kreissäge, bevorzugt Tischkreissäge, insbesondere Formatkreissäge, ausgebildet sein. Das Sägeblatt kann durch eine Schwenkeinrichtung einseitig oder beidseitig, insbesondere in Richtung einer Bedienseite der Sägemaschine, verschwenkt werden. Der Schwenkwinkel kann z.B. ± 45° oder ggf. auch mehr betragen. Das Sägeblatt kann ferner mittels einer Hubvorrichtung in der Höhe verstellt werden, was auch in der oder den Schwenklage(n) möglich ist. Das kreisförmige Sägeblatt kann außerdem gewechselt werden und kann unterschiedliche Durchmesser haben. Die Schutzhaube deckt das Sägeblatt in den verschiedenen Betriebsstellungen ab.

Die beanspruchte Schutzvorrichtung, insbesondere ihre Stellvorrichtung, kann die Schutzhaube relativ zum Sägeblatt verstellen. Sie kann dabei die Schutzhaube seitlich und quer zur axialen Schnittlinie oder dem axialen Austrittschlitz des Sägeblatts am Maschinentisch der Sägemaschine bewegen und positionieren. Die Stellvorrichtung kann die umfangseitig geschlossene Schutzhaube als Ganzes bewegen. Sie kann die Schutzhaube seitlich und quer zum Sägeblatt bzw. zur axialen Schnittlinie oder dem axialen Austrittschlitz verschieben. Bei der Sägemaschine wird das zu sägende Werkstück relativ zum ortsfesten Sägeblatt bewegt. Für das bewegte Werkstück können an der Sägemaschine eine üblicherweise parallel zur Schnittlinie verfahrbare Werkstückauflage sowie dortige Werkstückanschläge angeordnet sein.

Die Stellvorrichtung kann mit ihrem mindestens einen steuerbaren Antrieb die Schutzhaube einachsig oder mehrachsig bewegen und in die gewünschte Position relativ zum Sägeblatt bringen. Die Stellvorrichtung kann eine oder mehrere, bevorzugt lineare, Stellachsen aufweisen. Die steuerbaren Antriebe können über den Weg gesteuert oder positionsgesteuert sein. Hierbei sind durch den mindestens einen steuerbaren Antrieb auch Zwischenpositionen auf dem Stellweg in den ein oder mehreren Stellachsen möglich. Dies erlaubt eine bessere und genauere Positionierung der Schutzhaube relativ zur aktuellen Lage des Sägeblatts. Hierdurch ergeben sich Vorteile für eine Minimierung einer Störwirkung der Schutzhaube an der Sägemaschine.

Erfindungsgemäß weist die Schutzvorrichtung eine Steuerung auf, welche die aktuelle Lage einer Schneidkante des Sägeblatts ermittelt und dabei den vorhandenen Durchmesser, den Schwenkwinkel und die Höhenlage des Sägeblatts mit der aktuellen Maschineneinstellung berücksichtigt. Anhand des Ermittlungsergebnisses kann die Stellvorrichtung die Schutzhaube relativ zum Sägeblatt positionieren. Diese Positionierung erfolgt automatisch und umfasst auch die erwähnten Zwischenpositionen.

Die automatische Positioniermöglichkeit unter Einbeziehung von Zwischenpositionen ist vorteilhaft für die erwähnte Optimierung der Schutzhaubenposition für den Sägebetrieb. Insbesondere können störende Einflüsse der zu Schutzzwecken das Sägeblatt überdeckenden Schutzhaube vermindert oder vermieden werden. Der Sägebetrieb mit der beanspruchten Schutztechnik kann störungsärmer als beim Stand der Technik sein, insbesondere bei einer zur Bedienseite der Sägemaschine gerichteten Schwenklage des Sägeblatts.

In den Schwenklagen hat das schräg gestellte Sägeblatt eine seitliche Ausladung bzw. Seitenausladung und eine aufrechte Ausladung bzw. Höhenausladung. Die Seitenausladung meint den Abstand der umfangseitigen Schneidkante des kreisrunden Sägeblatts von der Schnittlinie bzw. dem Austrittsschlitz an der Sägemaschine. Die Höhenausladung bezieht sich auf den Höhenabstand der besagten Schneidkante von der Schnittlinie bzw. dem Austrittsschlitz und der Oberfläche des Maschinentischs. Die besagte Seiten- und Höhenausladung hängt einerseits vom aktuellen Schwenkwinkel des Sägeblatts und andererseits von der Höhenlage oder Ausfahrlänge des Sägeblatts ab. Sie hängt außerdem vom Sägeblattdurchmesser ab.

Die beanspruchte Schutztechnik erlaubt es, die Sägeschutzhaube unter Berücksichtigung der aktuellen Seiten- und Höhenausladung möglichst störungsgünstig relativ zum Sägeblatt zu positionieren. Hierfür kann die Steuerung die aktuelle Lage des Sägeblatts ermitteln. Bei einem geschwenkten Sägeblatt kann die besagte Lage des Sägeblatts und der Schneidkante hinsichtlich der seitlichen Ausladung und ggf. der aufrechten Ausladung ermittelt werden. Die Schneidkante definiert dabei die am weitesten außen liegende Kontur oder Störkontur des Sägeblatts.

Die beanspruchte Schutztechnik ermöglicht es, die Sägeschutzhaube in Anpassung an die besagte Seitenausladung nahe und mit ausreichendem Sicherheitsabstand an der Schneidkante zu positionieren, insbesondere in einer besagten Zwischenposition bei einem nur teilweise in der Höhe ausgefahrenen Sägeblatt. Dies ist besonders für die zur Bedienseite hin gerichtete Schwenklage von Vorteil.

Bei einem nur teilweise in der Höhe ausgefahrenen Sägeblatt oder auch einem im Durchmesser kleinen Sägeblatt kann die Sägeschutzhaube entsprechend der geringeren Seitenausladung näher an der Schnittlinie bzw. am Austrittsschlitz positioniert werden. Hierdurch kann der Störeinfluss auf das bewegte Werkstück und die üblicherweise parallel zur Schnittlinie verfahrbare Werkstückauflage sowie dortige Werkstückanschläge minimiert werden. Ein quer zur Schnittlinie gerichteter Werkstückanschlag kann dank der Zwischenposition der Schutzhaube näher an die Schnittlinie herangerückt werden, wodurch die Anschlagfunktion und die Führungsgenauigkeit für das Werkstück optimiert werden können. Günstige Auswirkungen ergeben sich auch für evtl. Werkstückniederhalter, die auf der beweglichen Werkstückauflage montiert sind.

Die beanspruchte Schutzvorrichtung, insbesondere die Stellvorrichtung, kann die Schutzhaube seitlich und quer zur axialen Schnittlinie oder dem axialen Austrittschlitz bewegen und positionieren. Dies kann eine lineare Schiebebewegung sein, die rechtwinklig zur besagten Schnittlinie und parallel zur ebenen Tischoberfläche gerichtet ist. Die Schutzvorrichtung, insbesondere die Stellvorrichtung, kann bedarfsweise und ggf. zusätzlich die Schutzhaube in der Höhe relativ zum Sägeblatt bewegen und positionieren. Dies kann eine Hubbewegung mit ebenfalls linearer Ausrichtung sein. Hierüber kann eine Höhenanpassung an vorhandene Werkstückabmessungen erfolgen. Die Werkstückhöhe kann an der Sägemaschine über eine Bedieneinrichtung eingegeben werden. Sie kann auch von der Steuerung der Schutzvorrichtung aus den aktuellen Werten von Schwenkwinkel und Höhenlage sowie Durchmesser des Sägeblatts ermittelt werden. Die Höhenlage der Schutzhaube kann automatisch eingestellt und von der Stellvorrichtung angefahren werden. Die Stellvorrichtung weist vorzugsweise mehrere Stellachsen und mehrere Antriebe auf.

Die Schutzhaube kann eine störungsgünstige Haubenform aufweisen. Sie kann einen Haubenkorpus mit einem bevorzugt zentralen Haubenträger und damit fest oder wechselbar verbundenen Korpusteilen und dort ausgebildeten Seitenwänden aufweisen. Die Schutzhaube kann eine seitliche und in Einbaulage zur Bedienseite der Sägemaschine weisende Haubenwand aufweisen, die bevorzugt flach und aufrecht ausgebildet ist. Die Schutzhaube kann ferner eine gegenüberliegende andere seitliche Haubenwand aufweisen. Diese kann flach oder ausgebaucht sein. Eine ausgebauchte Form ist zur Aufnahme des Sägeblatts in einer Schwenklage von Vorteil. Die Schutzhaubenform und die besagte andere Haubenwand können bedarfsweise verändert werden. Die Veränderung der Haubenform erfolgt durch Wechsel von einer oder beiden Korpusteilen oder Haubenwänden. Die Schutzvorrichtung kann eine Absaugeinrichtung für die Schutzhaube aufweisen.

Die Schutzvorrichtung kann dermaßen gesteuert sein, dass sie die zur Bedienseite weisende seitliche Haubenwand in einer bestimmten Entfernung zu der Schneidkante eines Sägeblatts positioniert, welches eine zur Bedienseite weisende Schwenklage einnimmt. Diese Schwenklage ist für Störeinflüsse der Schutzhaube besonders relevant. Bei einer kleinen Seitenausladung der Schneidkante kann die besagte seitliche Haubenwand näher an die Schnittlinie bzw. an den Austrittsschlitz herangerückt werden, was die Störwirkung dieser Haubenwand reduziert.

Für die andere und von der Bedienseite wegweisende Schwenklage kann das Störproblem geringer sein. Bei dieser Schwenklage oder einer aufrechten Lage des Sägeblatts kann die Schutzhaube mit ihrer zur Bedienseite weisenden seitlichen Haubenwand an der axialen Schnittlinie oder dem axialen Austrittsschlitz positioniert werden. Dies kann in größtmöglicher Nähe zur Schnittlinie oder zum Austrittsschlitz erfolgen. Die Schutzhaube kann hierbei in allen von der Bedienseite wegweisenden Schwenklagen bzw. Schwenkwinkeln und bei allen Sägeblattdurchmessern bzw. Ausfahrlängen des Sägeblatts die gleiche Position behalten. Alternativ ist auch bei den von der Bedienseite wegweisenden Schwenklagen eine an die jeweilige Seitenausladung angepasste seitliche Positionierung der Schutzhaube möglich.

Die Schutzvorrichtung kann eine Erfassungseinrichtung für die Position der Schutzhaube aufweisen. Diese kann in unterschiedlicher Weise ausgebildet sein. Sie kann einteilig oder mehrteilig sein. Die Erfassungseinrichtung kann z.B. eine Sensorik an einem Antrieb der Stellvorrichtung aufweisen. Dies kann z.B. ein Wegmesser sein, der bei einer bevorzugt linearen Antriebs- und Verstellbewegung den Antriebsweg und den Stellweg der Schutzhaube misst. Hieraus kann die Position der Schutzhaube ermittelt werden. Eine solche Sensorik kann an einem oder mehreren Antrieben der Stellvorrichtung vorhanden sein.

Die Erfassungseinrichtung kann alternativ oder zusätzlich eine Sensorik aufweisen, die in oder an der Schutzhaube angeordnet ist. Diese Sensorik kann den in der Schutzhaube befindlichen Teil des Sägeblatts detektieren. Mittels einer Abstandsmessung oder auf andere Weise kann die Relativposition zwischen Schutzhaube und diesem Sägeblattbereich ermittelt werden.

Die aktuellen Werte für den Durchmesser und/oder den Schwenkwinkel und/oder die Höhenlage des Sägeblatts können an der Sägemaschine über eine Bedieneinrichtung eingebeben werden. Dies schließt auch eine Datenübertragung auf anderem Wege, z.B. leitungsgebunden oder drahtlos oder mittels eines Sticks oder dergleichen ein. Die Erfassungseinrichtung kann alternativ oder zusätzlich eine Sensorik zur Erfassung von Durchmesser und/oder Schwenkwinkel und/oder Höhenlage des Sägeblatts aufweisen. Durch diese automatische Erfassung können eventuelle Fehler bei einer Bedienereingabe detektiert und ggf. korrigiert werden.

Die Steuerung der Schutzvorrichtung kann in unterschiedlicher Weise ausgebildet sein. Sie kann hardwaremäßig und/oder softwaremäßig ausgebildet sein. Es kann sich insbesondere um ein Hardware- oder Software-Modul handeln. Dieses kann bedarfsweise auch in eine Steuereinrichtung der Sägemaschine implementiert werden. Dies kann bei einer Erstausrüstung und auch einer Nachrüstung bzw. Umrüstung erfolgen.

Die Sägemaschine kann einen Vorritzer aufweisen. Dieser kann ggf. zusammen mit dem Sägeblatt verstellt werden. Der Vorritzer und ggf. ein Spaltkeil können in der Schutzhaube aufgenommen und abgedeckt werden.

In den Unteransprüchen sind weitere vorteilhafte Ausgestaltungen der Erfindung angegeben.

Die Erfindung ist in den Zeichnungen beisielhaft und schematisch dargestellt. Im Einzelnen zeigen:
- Figur 1:: eine perspektivische Ansicht einer Sägemaschine mit einer Schutzvorrichtung für das Sägeblatt,
- Figur 2:: eine andere perspektivische Ansicht der Sägemaschine von Figur 1,
- Figur 3:: eine abgebrochene und vergrößerte Darstellung einer Schutzhaube gemäß Figur 2,
- Figur 4:: eine geschnittene Ansicht der Sägemaschine gemäß Pfeil IV von Figur 1 mit einer Darstellung verschiedener Schwenklagen und Durchmesser eines Sägeblatts und unterschiedlicher Positionen einer Schutzhaube der Schutzvorrichtung,
- Figur 5:: eine geschnittene Frontansicht einer Schutzhaube mit unterschiedlichen Gestaltungsmöglichkeiten und variierenden Innenweiten,
- Figur 6:: ein schematischer Schnitt durch die Sägemaschine von Figur 1 mit schematischer Darstellung einer Schwenkeinrichtung und einer Hubvorrichtung für ein in verschiedenen Schwenklagen dargestelltes Sägeblatt,
- Figur 7 und 8:: eine vergrößerte Schnittdarstellung gemäß Figur 6 mit einem aufrechten Sägeblatt in verschiedenen Höhenlagen,
- Figur 9 und 10:: eine abgebrochene Schnittdarstellung gemäß Figur 6 mit verschiedenen von der Bedienseite wegweisenden Schwenklagen des Sägeblatts und gleichbleibender Schutzhaubenposition und
- Figur 11 und 12:: eine Schnittdarstellung gemäß Figur 6 mit verschiedenen zur Bedienseite weisenden Schwenklagen des Sägeblatts und angepassten, variierenden Schutzhaubenpositionen.

Die Erfindung betrifft eine Schutzvorrichtung (2) und ein Schutzverfahren für ein Sägeblatt (3) an einer Sägemaschine (1). Die Erfindung betrifft auch eine mit einer Schutzvorrichtung (2) ausgerüstete Sägemaschine (1).

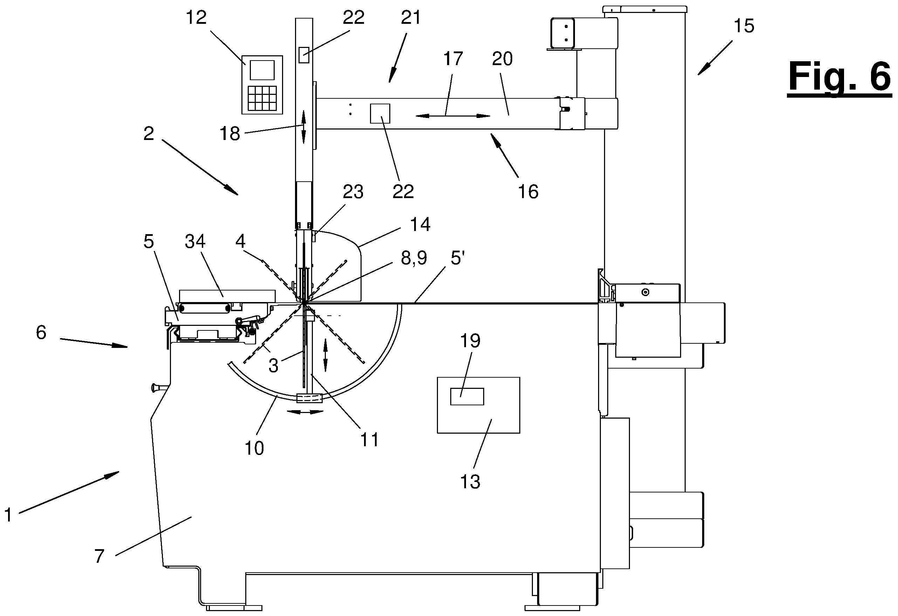

Die Sägemaschine (1) ist z.B. als Kreissäge ausgebildet, z.B. als Tischkreissäge, insbesondere als Formatkreissäge. Sie weist ein kreisrundes und rotierend angetriebenes Sägeblatt (3) auf. Das Sägeblatt (3) kann mittels einer in Figur 6 angedeuteten Hubvorrichtung (11) in seiner Höhenlage verstellt werden. Es kann ferner mittels einer Schwenkeinrichtung (10) in zwei Richtungen verschwenkt werden, nämlich in Richtung hin zu einer Bedienseite (6) der Sägemaschine (1) und weg von der Bedienseite (6). Der Schwenkwinkel beträgt z.B. ca. ± 45°.Das Sägeblatt (3) kann in einer anderen Ausführung nur in einer Richtung, insbesondere in Richtung zur Bedienseite (6), verschwenkt werden.

Das Sägeblatt bzw. Kreissägeblatt (3) weist eine Schneidkante (4) an seinem kreisrunden Umfang auf. Die Schneidkante wird durch Schneidzähne oder andere Schneidmittel gebildet.

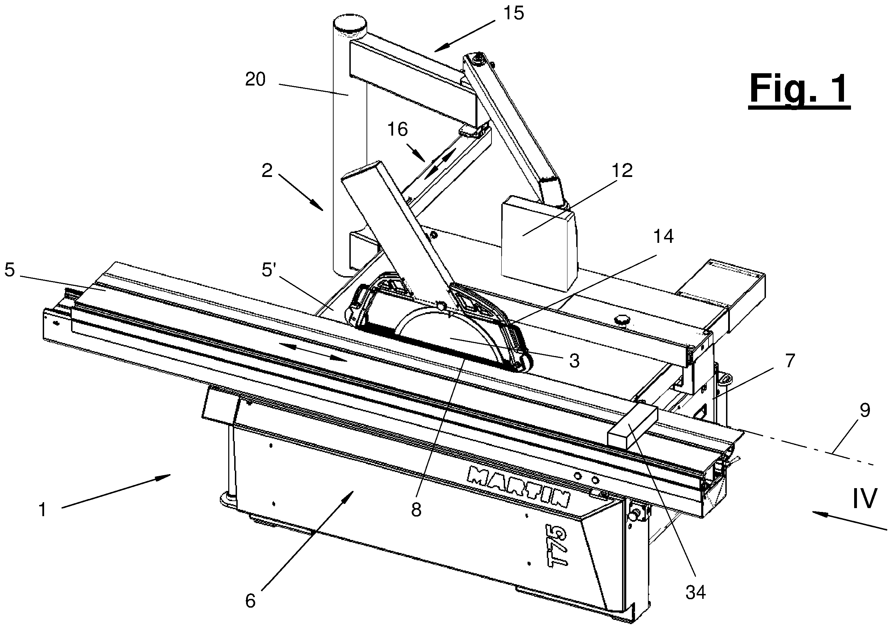

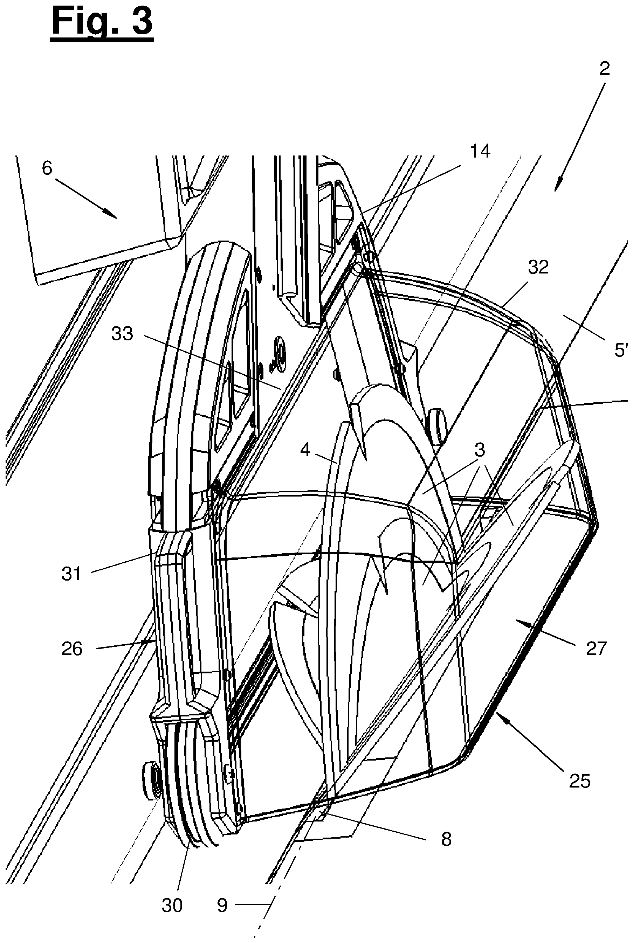

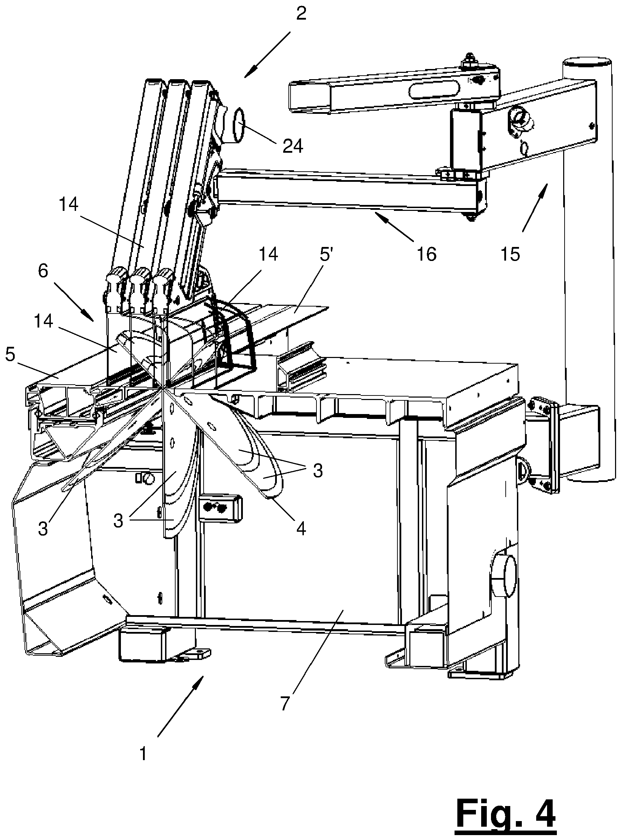

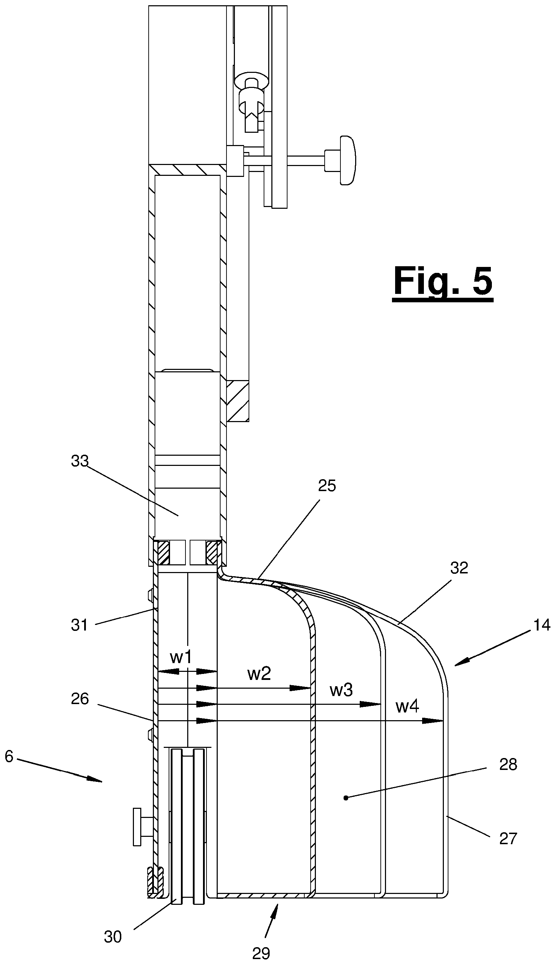

Wie Figur 1 bis 6 verdeutlichen, weist die Sägemaschine (1) ein Maschinengestell (7) mit einem Maschinentisch (5') auf, der einen axialen Austrittsschlitz (8) für das Sägeblatt (3) aufweist. Die Länge des Austrittsschlitzes (8) ist begrenzt und auf den Durchmesser des Sägeblatts (3) abgestimmt. Am Maschinengestell (7) kann eine in Zuführrichtung bzw. in Axialrichtung der Sägemaschine (1) verfahrbare Werkstückauflage (5) für ein zu sägendes Werkstück angeordnet sein. Diese wird auch als Schiebetisch bezeichnet. Der Antrieb für das Sägeblatt (3), die Hubvorrichtung (11) und die Schwenkeinrichtung (10) sind im Maschinengestell (7) unterhalb der Oberseite des Maschinentischs (5') angeordnet. Das Sägeblatt (3) kann bedarfsweise gewechselt werden und kann verschiedene Durchmesser haben. In Figur 3 und 5 sind verschiedene Durchmesser angedeutet. Das Sägeblatt (3) ist beim Sägevorgang ortsfest im Maschinengestell (7) angeordnet.

Die Schwenkeinrichtung (10) wird z.B. von einer in Figur 6 angedeuteten Bogenführung und einem Schwenkträger gebildet. An dem Schwenkträger ist die Hubvorrichtung (11) angeordnet und wird bei den Schwenkbewegungen mitgenommen. An der Hubvorrichtung (11) sind die Lagerung und ggf. der Antrieb des rotierenden Sägeblatts (3) angeordnet. Sie können mitsamt des Sägeblatts (3) in der Höhe verstellt werden. Die Hubvorrichtung (11) weist hierfür z.B. einen Schlitten und eine mit der Schwenkeinrichtung (10) verbundene lineare Schlittenführung auf. Die Hubvorrichtung (11) verschiebt das Sägeblatt (3) in seiner ggf. verschwenkten Hauptebene und bestimmt dessen sog. Höhenlage.

Für das Sägeblatt (3) gibt es eine Schnittlinie (9), entlang der ein nicht dargestelltes Werkstück bei aufrechter Sägeblattausrichtung relativ zum Sägeblatt (3) bewegt und dabei geschnitten wird. Die gerade Schnittlinie (9) verläuft längs des axialen Austrittsschlitzes (8), durch den das Sägeblatt (3) aus dem Maschinengestell (7) nach außen tritt und nach oben ragt.

Die Sägemaschine (1) weist ferner eine Bedieneinrichtung (12) und eine Steuereinrichtung (13) auf. Die Bedieneinrichtung (12) kann ein oder mehrere Eingabemittel, z.B. Tasten, I/O-Schnittstellen oder dgl. aufweisen. Sie kann auch eine oder mehrere Anzeigen, z.B. einen Bildschirm, Zeilendisplays oder dgl. aufweisen. Die Steuereinrichtung (13) weist eine mikroprozessorgestützte Rechen- und Steuereinheit sowie Speicher für Prozessdaten, Werkzeugdaten etc. auf.

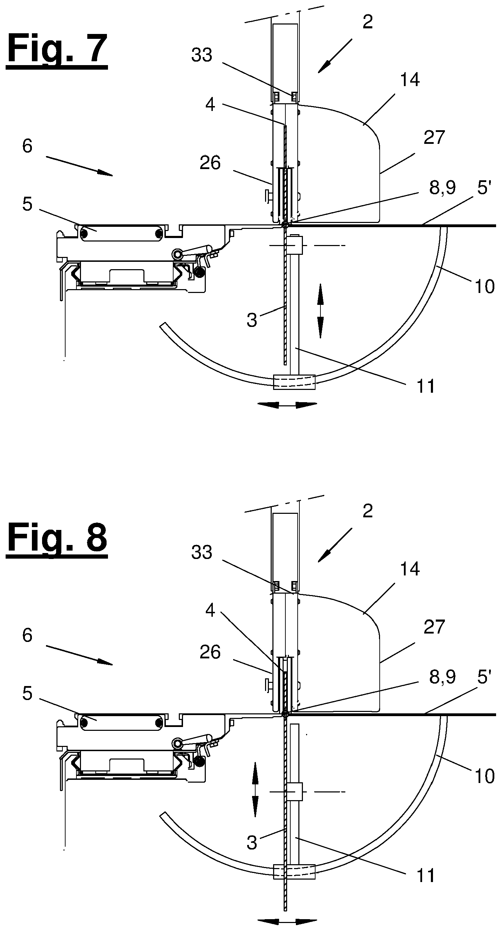

Die Sägemaschine (1) weist eine Schutzvorrichtung (2) für das Sägeblatt (3) auf. Die Schutzvorrichtung (2) beinhaltet eine hohle Schutzhaube (14), die in der Betriebsstellung den Austrittsschlitz (8) und den aus dem Maschinengestell (7) herausragenden Teil des Sägeblatts (3) überdeckt. Die Schutzhaube (14) weist eine untere Haubenöffnung (29) und einen hohlen Innenraum (28) auf, die von oben über das Sägeblatt (3) gestülpt werden. Der Innenraum (28) nimmt das Sägeblatt (3) in den verschiedenen, in Figur 7 bis 12 dargestellten Ausrichtungen bzw. Schwenklagen auf.

Die Sägemaschine (1) kann außerdem einen ggf. rotierend angetriebenen und mit dem Sägeblatt (3) verstellbaren Vorritzer aufweisen. Ferner kann am Sägeblatt (3) ein Spaltkeil vorhanden sein. Diese nicht dargstellten Komponenten können ebenfalls in der Schutzhaube (14) und deren Innenraum (28) aufgenommen sein.

Die Schutzvorrichtung (2) weist eine Haltevorrichtung (15) für die Schutzhaube (14) auf. Diese kann z.B. einen galgenartigen und ggf. mehrgliedrigen Tragarm (20) umfassen, der ein- oder mehrachsig beweglich ist und der die Schutzhaube (14) an der Oberseite fasst und hält. Die Haltevorrichtung (15), insbesondere der Tragarm (20), kann an der Sägemaschine (1) montiert sein. Die Haltevorrichtung (15) kann bedarfsweise für besondere Sägeprozesse ein Entfernen, insbesondere Wegschwenken, der Schutzhaube (14) vom Sägeblatt (3) erlauben.

Die Schutzvorrichtung (2) umfasst ferner eine Stellvorrichtung (16), welche die Schutzhaube (14) bewegt und positioniert. Die Stellvorrichtung (16) weist eine oder mehrere Stellachsen für eine ein- oder mehrachsige Stellbewegung auf. Sie umfasst ferner einen oder mehrere steuerbare Antriebe (17,18). Der oder die steuerbare(n) Antrieb(e) (17,18) können an geeigneter Stelle angeordnet sein, z.B. am Tragarm (20), an dessen Verbindungsbereich zum Maschinengestell (7) oder an anderer Stelle.

In der gezeigten Ausführungsform ist die Stellvorrichtung (16) mehrachsig. Die Stellvorrichtung (16) führt bevorzugt lineare Stellbewegungen aus. Sie hat z.B. zwei Stellachsen und zwei steuerbare Antriebe (17,18), die in Figur 6 schematisch angedeutet und durch Pfeile symbolisiert sind.

Die steuerbaren Antriebe (17,18) sind positionierfähig. Sie können über den Weg gesteuert oder positionsgesteuert sein. Die steuerbaren Antriebe (17,18) können einen steuerbaren und bevorzugt elektrischen Motor aufweisen. Sie können ein mit dem Motor verbundenes Stellmittel, z.B. einen Spindeltrieb, Zahnstangentrieb oder dgl. beinhalten.

Die Stellvorrichtung (16) kann in den gezeigten Ausführungsbeispielen die Schutzhaube (14) mit einer linearen Stellbewegung bzw. Verschiebebewegung quer, insbesondere rechtwinklig zur Schnittlinie (9) bzw. zum Austrittsschlitz (8) seitlich verschieben. Die Verschiebebewegung kann parallel zur bevorzugt ebenen Oberfläche des Maschinentischs (5') gerichtet sein.

Die Stellvorrichtung (16) kann außerdem eine aufrechte Stellbewegung ausführen, die z.B. senkrecht zur Tischoberfläche ausgerichtet ist. Hierdurch kann die Schutzhaube (14) gehoben und gesenkt werden. Alternativ kann die Stellvorrichtung (16) eine andere Kinematik haben.

Die Schutzvorrichtung (2) umfasst ferner eine Steuerung (19). Sie kann außerdem eine Erfassungseinrichtung (21) aufweisen. Die Steuerung (19) kann mit der Stellvorrichtung (16) und ggf. mit der Erfassungseinrichtung (21) verbunden sein. Die Steuerung (1) ist in den gezeigten Ausführungsbeispielen als Software-Modul ausgebildet. Sie ist in die Steuereinrichtung (13) der Sägemaschine (1) implementiert.

Die Erfassungseinrichtung (21) weist z.B. eine Sensorik (22) auf. Diese kann einem steuerbaren Antrieb (17,18) zugeordnet sein. Sie kann einzeln oder mehrfach vorhanden sein. Die Sensorik (22) kann z.B. einen Wegmesser oder einen Positionssensor oder dgl. aufweisen.

Die Erfassungseinrichtung (21) kann eine Sensorik (23) aufweisen, die in oder an der Schutzhaube (14) angeordnet ist. Diese kann z.B. das im Innenraum (28) befindliche Sägeblatt (3) und dessen Lage erfassen. Sie kann alternativ oder zusätzlich die Lage des Austrittsschlitzes (8) und hierüber die Position der Schutzhaube (14) relativ zum Austrittsschlitz (8) erfassen. Die Sensorik (23) kann ferner alternativ oder zusätzlich die eingesetzten Korpusteile (31,32) erkennen und identifizieren, insbesondere hinsichtlich ihrer Form der seitlichen Haubenwand (26,27).

Für den Sägebetrieb können von einem Bediener manuell oder ferngesteuert Werte für den gewünschten Schwenkwinkel und/oder die gewünschte Höhenlage des Sägeblatts (3) und ggf. auch für den aktuellen Sägeblattdurchmesser eingegeben werden. Dies kann z.B. über die Bedieneinrichtung (12) erfolgen. Die Steuerung (19) kann diese Werte bzw. Einstellungen von der Sägemaschine (1), insbesondere von deren Steuereinrichtung (13) abrufen und verarbeiten.

Die Erfassungseinrichtung (21) kann ferner eine nicht dargestellte Sensorik aufweisen, mit welcher der Durchmesser und/oder der Schwenkwinkel und/oder die Höhenlage in der aktuellen Situation oder Ist-Lage des Sägeblatts (3) erfasst werden können.

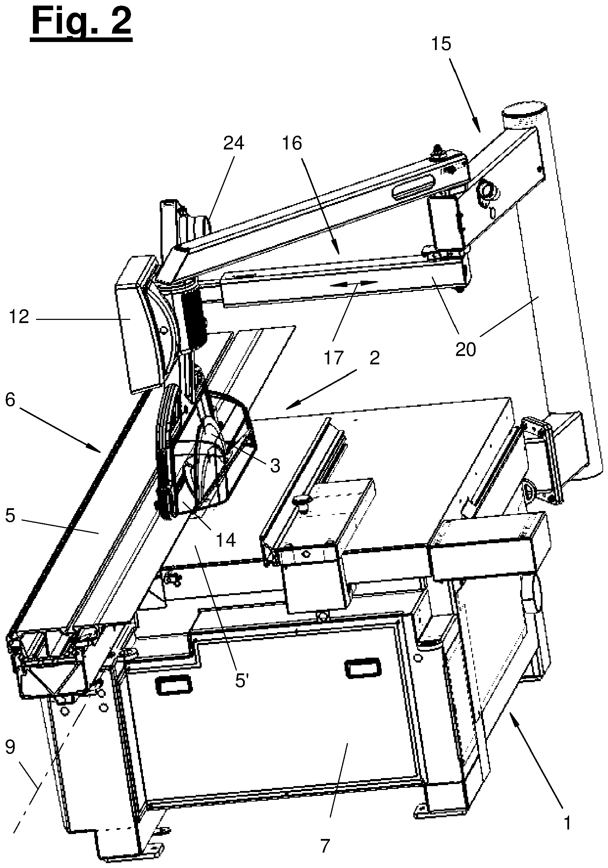

Wie Figur 2, 3 und 5 verdeutlichen, weist die Schutzhaube (14) eine seitliche Haubenwand (26) auf, die in der Einbaustellung zur Bedienseite (6) der Sägemaschine (1) weist. Die seitliche Haubenwand (26) hat eine aufrechte Lage und ist bevorzugt flach bzw. eben ausgebildet. Die Schutzhaube (14) weist ferner eine gegenüberliegende andere seitliche Haubenwand (27) auf. Diese kann z.B. die in den Zeichnungen dargestellte ausbauchende Form haben. Sie kann alternativ flach und eben ausgebildet sein.

Die Schutzhaube (14) weist einen Haubenkorpus (25) mit einem bevorzugt zentralen Haubenträger (33) auf. Der Haubenkorpus (25) kann von mehreren Korpusteilen (31,32) gebildet werden, die mit dem Haubenträger (33) fest oder wechselbar verbunden sein können. An den Korpusteilen (31,32) sind die besagten Haubenwände (26,27) ausgebildet.

Wie Figur 5 verdeutlicht, können unterschiedlich geformte Korpusteile (31,32) miteinander kombiniert werden. Insbesondere das Korpusteil (32) mit der von der Bedienseite (6) abgewandten seitlichen Haubenwand (27) können unterschiedlich geformt sein. Hierbei können sich z.B. durch Entfall oder Variation der Ausbauchung unterschiedliche Innenweiten w1-w4 der Schutzhaube (14) ergeben. Die Störkontur der Schutzhaube (14) an der von der Bedienseite (6) abgewandten Haubenseite kann bedarfsweise durch Wechsel des Korpusteils (32) beeinflusst werden. Das bedienseitige Korpusteil (31) wird vorzugsweise beibehalten.

Am Haubenträger (33) kann ein Gewichtsausgleich vorhanden sein. Ferner kann die Schutzhaube (14) eine oder mehrere endseitige Rollen (30) und ggf. einen Griff aufweisen.

Die Schutzvorrichtung (2) kann ferner eine Absaugeinrichtung (24) aufweisen. Diese steht mit dem Innenraum (28) der Schutzhaube (14) über einen hohlen Haubenträger (33) in Verbindung und saugt den Sägestaub ab. Hierfür kann eine im Tragarm (20) verlegte Saugleitung vorhanden sein.

Figur 7 bis 12 verdeutlichen verschiedene Betriebstellungen des Sägeblatts (3) und die zugehörige Schutzhaubenposition, die von der Schutzvorrichtung (2), insbesondere der Stellvorrichtung (16), automatisch eingestellt wird.

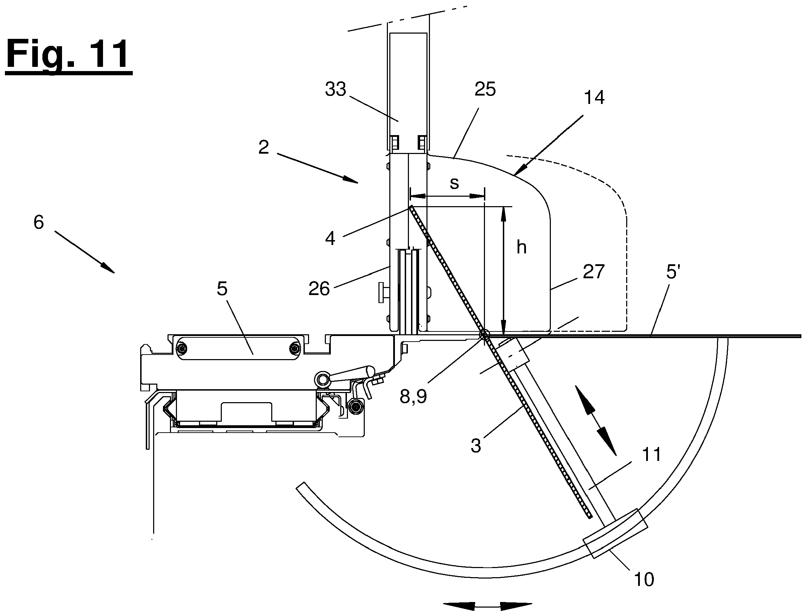

Wie Figur 11 verdeutlicht, hat das Sägeblatt (3) in den verschiedenen Schwenkstellungen jeweils eine seitliche Ausladung oder sog. Seitenausladung (s). Dies ist der seitliche Abstand der umfangseitigen Schneidkante (4) an deren Zenit von der Schnittlinie (9) bzw. vom Austrittsschlitz (8). Die Seitenausladung (s) variiert mit dem Schwenkwinkel. Sie hängt außerdem vom Sägeblattdurchmesser und von der Höhenlage des Sägeblatts (3) ab. Hierbei ist die aus dem Austrittsschlitz (8) ragende Länge des Sägeblatts (3) relevant. Bei einem aufrechten oder senkrechten Sägeblatt (3) gemäß Figur 7 und 8 ist die Seitenausladung (s) "0".

Ferner ergibt sich in den verschiedenen Betriebsstellungen des Sägeblatts (3) eine aufrechte Ausladung oder sog. Höhenausladungen (h). Diese hängt ebenfalls vom Schwenkwinkel und von der Höhenlage des Sägeblatts (3) sowie vom Sägeblattdurchmesser ab.

Die Steuerung (19) kann aus den von der Sägemaschine (1), insbesondere von der Steuereinrichtung (13), oder von der Erfassungseinrichtung (21) abgefragten aktuellen Werten für Sägeblattdurchmesser, Schwenkwinkel und Höhenlage des Sägeblatts (3) die aktuellen Werte für die Seitenausladung (s) und ggf. die Höhenausladung (h) ermitteln. Sie berechnet die aus dem Austrittsschlitz (8) ragende Länge des Sägeblatts (3) und auf dieser Basis anhand des Schwenkwinkels über die Cosinus- und Sinusfunktion die jeweilige Ausladung (s,h).

Diese Ausladungswerte können für die Positionierung der Schutzhaube (14) mittels der Stellvorrichtung (16) herangezogen werden. Die Seitenausladung (s) betrifft dabei die seitliche Position bzw. Verschiebeposition der Schutzhaube (14). Die Höhenausladung (h) kann eine Höhenlage der Schutzhaube (14) betreffen, die z.B. in Anpassung an ein Werkstückmaß eingestellt wird. Die besagten Positionen der Schutzhaube (14) können von der Schutzvorrichtung (2) bzw. der Stellvorrichtung (16) mit ihren Antrieben (17,18) automatisch angefahren werden.

Figur 7 und 8 verdeutlichen ein Sägeblatt (3) mit einer jeweils senkrechten Ausrichtung und mit unterschiedlichen Höhenlagen. Die Schutzhaube (14) wird dabei über dem Austrittsschlitz (8) und mit der einen bedienerseitigen flachen Haubenwand (26) nahe am Austrittsschlitz (8) positioniert. Die Haubenposition wird bei der Höhenverstellung des Sägeblatts (3) beibehalten.

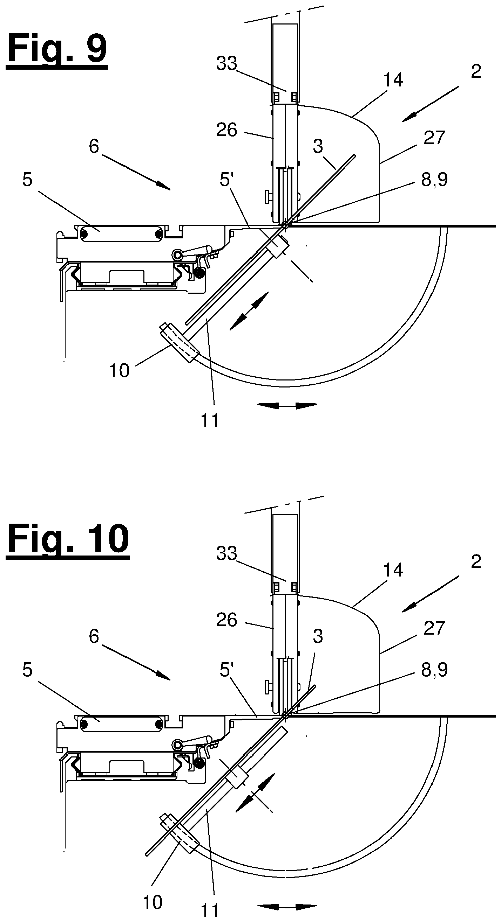

Figur 9 und 10 verdeutlichen ein Sägeblatt (3) in einer von der Bedienseite (6) wegweisenden Schwenklage. In der Betriebsstellung von Figur 9 ist das Sägeblatt (3) entlang des eingestellten Schwenkwinkels und in der Höhe weit ausgefahren. Die Schneidkante (4) ragt in den ausgebauchten Bereich der abgewandten Haubenwand (27). Die Schutzhaube (14) ist mit ihrer bedienerseitigen Haubenwand (26) nahe am Austrittschlitz (8) positioniert. Diese Haubenposition kann die gleiche wie bei der vorbeschriebenen senkrechten Ausrichtung des Sägeblatts (3) sein.

In der Betriebsstellung von Figur 10 ist bei gleichem Schwenkwinkel die Höhenlage des Sägeblatts (3) verringert. Es ragt dadurch weniger weit in den Inneraum (28) der Schutzhaube (14). In diesem Fall kann die Schutzhaube (14) in der in Figur 9 gezeigten Position am Austrittsschlitz (8) bleiben.

In dieser schlitznahen Position hat die Schutzhaube (14) dank der flachen oder ebenen bedienerseitigen Haubenwand (26) und ihrer schlitznahen Lage eine minimale Störkontur für Sägemaschinenkomponenten, die an der Bedienseite (6) nahe am Austrittsschlitz (8) angeordnet werden sollen. Dies kann z.B. ein in Figur 1 und 6 angedeuteter Werkstückanschlag (34), ein Werkstückniederhalter oder dgl. sein. Diese Teile können an der beweglichen Werkstückauflage (5) angeordnet sein.

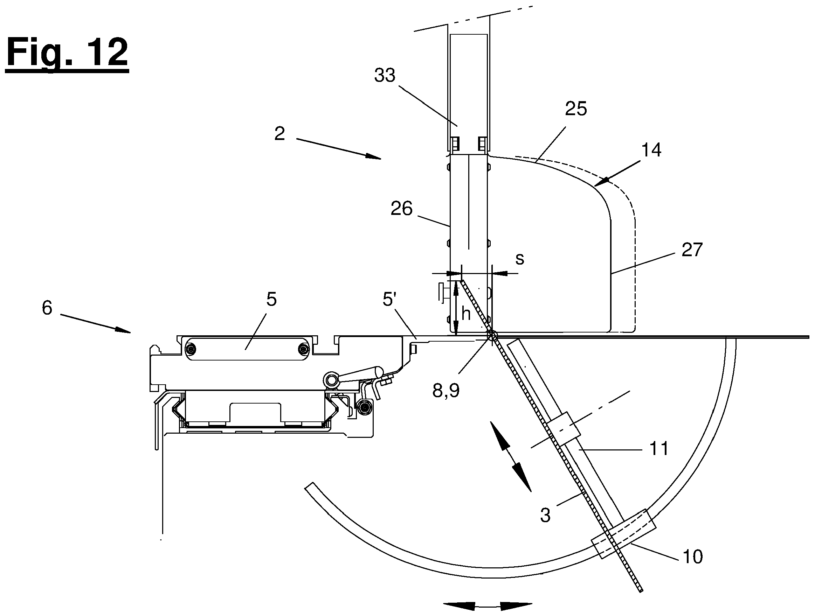

Figur 11 und 12 verdeutlichen andere Betriebsstellungen des Sägeblatts (3) in einer zur Bedienseite (6) gerichteten Schwenklage. In der Betriebsstellung von Figur 11 ist das geschwenkte Sägeblatt (3) in der Höhe weit ausgefahren und/oder hat einen großen Durchmesser. Es hat dadurch eine große Seitenausladung (s). Um das Sägeblatt (3) aufnehmen zu können, ist die Schutzhaube (14) in Richtung zur Bedienseite (6) in Anpassung an die Seitenausladung (s) verschoben. Hierbei kann auch ein seitlicher Sicherheitsabstand zwischen der Schneidkante (4) und der Innenseite der bedienerseitigen Haubenwand (26) eingehalten werden.

Figur 12 zeigt die andere Betriebsstellung des Sägeblatts (3) mit gleichem Schwenkwinkel und einer verkleinerten Höhenlage des Sägeblatts (3) oder einem kleineren Sägeblattdurchmesser. In diesem Fall ist die Seitenausladung (s) kleiner. Die Schutzhaube (14) ist in ihrer Position an diese Verkleinerung angepasst und kann mit ihrer bedienerseitigen Haubenwand (26) entsprechend näher am Austrittsschlitz (8) positioniert werden. Hierdurch wird die Störkontur der Schutzhaube (14) in Richtung zur Bedienseite (6) verringert.

Abwandlungen der gezeigten und beschriebenen Ausführungsformen sind in verschiedener Weise möglich. Insbesondere können die Merkmale der vorbeschriebenen Ausführungsbeispiele und der genannten Abwandlungen im Rahmen der Ansprüche beliebig miteinander kombiniert, insbesondere auch vertauscht werden.

### BEZUGSZEICHENLISTE

- 1: Sägemaschine, Formatkreissäge
- 2: Schutzvorrichtung
- 3: Sägeblatt, Kreissägeblatt
- 4: Schneidkante, Störkante
- 5: Werkstückauflage
- 5': Maschinentisch
- 6: Bedienseite
- 7: Maschinengestell
- 8: Austrittsschlitz
- 9: Schnittlinie
- 10: Schwenkeinrichtung
- 11: Hubvorrichtung
- 12: Bedieneinrichtung
- 13: Steuereinrichtung
- 14: Schutzhaube
- 15: Haltevorrichtung
- 16: Stellvorrichtung
- 17: Antrieb, Schiebeantrieb
- 18: Antrieb, Hubantrieb
- 19: Steuerung
- 20: Tragarm
- 21: Erfassungseinrichtung
- 22: Sensorik
- 23: Sensorik
- 24: Absaugeinrichtung
- 25: Haubenkorpus
- 26: Haubenwand seitlich flach, Flachseite
- 27: Haubenwand seitlich ausbauchend
- 28: Innenraum
- 29: Haubenöffnung unten
- 30: Rolle
- 31: Korpusteil, flach
- 32: Korpusteil, bauchig
- 33: Haubenträger
- 34: Werkstückanschlag
- h: aufrechte Ausladung, Höhenausladung
- s: seitliche Ausladung, Seitenausladung
- w: Innenweite

## Patentansprüche

1. Schutzvorrichtung für rotierende, heb- und senkbare sowie schwenkbare Sägeblätter (3) an einer Sägemaschine (1), insbesondere einer Formatkreissäge, wobei die Schutzvorrichtung (2) eine Schutzhaube (14) für das Sägeblatt (3) und eine Stellvorrichtung (16) zum Verstellen der Schutzhaube (14) relativ zum Sägeblatt (3) aufweist, wobei die Stellvorrichtung (16) mindestens einen steuerbaren Antrieb (17,18) für die einachsige oder mehrachsige Bewegung und Positionierung der Schutzhaube (14) relativ zum Sägeblatt (3) aufweist, wobei die Schutzvorrichtung (2) eine Steuerung (19) aufweist, **dadurch gekennzeichnet, dass** die Steuerung die aktuelle Lage einer Schneidkante (4) des Sägeblatts (3) unter Berücksichtigung von Durchmesser, Schwenkwinkel und Höhenlage des Sägeblatts (3) ermittelt und auf Basis des Ergebnisses mittels der Stellvorrichtung (16) die Schutzhaube (14) relativ zum Sägeblatt (3) automatisch positioniert.

2. Schutzvorrichtung nach Anspruch 1, **dadurch gekennzeichnet, dass** die Steuerung (19) die aktuelle Lage des Sägeblatts (3), insbesondere des geschwenkten Sägeblatts (3), hinsichtlich seiner seitlichen Ausladung (s) und/oder hinsichtlich seiner aufrechten Ausladung (h) ermittelt.

3. Schutzvorrichtung nach Anspruch 1 oder 2, **dadurch gekennzeichnet, dass** die Schutzvorrichtung (2), insbesondere die Stellvorrichtung (16), die Schutzhaube (14) seitlich und quer zu einer axialen Schnittlinie (9) oder einem axialen Austrittsschlitz (8) des Sägeblatts (3) bewegt, insbesondere verschiebt, und positioniert und/oder die Schutzhaube (14) in der Höhe relativ zum Sägeblatt (3) bewegt und positioniert.

4. Schutzvorrichtung nach einem der vorhergehenden Ansprüche, **dadurch gekennzeichnet, dass** die Schutzhaube (14) eine seitliche und zu einer Bedienseite (6) der Sägemaschine (1) weisende, bevorzugt flache, Haubenwand (26) und eine andere gegenüberliegende, flache oder ausbauchende andere seitliche Haubenwand (27) aufweist.

5. Schutzvorrichtung nach Anspruch 4, **dadurch gekennzeichnet, dass** die Schutzvorrichtung (2) bei einer zur Bedienseite (6) weisenden Schwenklage des Sägeblatts (3) die Schutzhaube (14) mit ihrer einen Haubenwand (26) in einer bestimmten seitlichen Entfernung zu der Schneidkante (4) positioniert und/oder bei einer aufrechten Lage oder einer von der Bedienseite (6) wegweisenden Schwenklage des Sägeblatts (3) die Schutzhaube (14) an einer axialen Schnittlinie (9) oder einem axialen Austrittsschlitz (8) des Sägeblatts (3) positioniert.

6. Schutzvorrichtung nach einem der vorhergehenden Ansprüche, **dadurch gekennzeichnet, dass** die Stellvorrichtung (16) mehrere steuerbare Antriebe (17,18) aufweist.

7. Schutzvorrichtung nach einem der vorhergehenden Ansprüche, **dadurch gekennzeichnet, dass** die Schutzvorrichtung (2) eine Erfassungseinrichtung (21) für die Erfassung der Position der Schutzhaube (14) und/oder für die Erfassung von Durchmesser und/oder Schwenkwinkel und/oder Höhenlage des Sägeblatts (3) aufweist.

8. Schutzvorrichtung nach einem der vorhergehenden Ansprüche, **dadurch gekennzeichnet, dass** die Schutzhaube (14) einen Haubenkorpus (25) mit einem zentralen Haubenträger (33) und daran fest oder wechselbar angeordneten und die Haubenwände (26,27) umfassenden Korpusteilen (31,32) aufweist.

9. Schutzvorrichtung nach einem der vorhergehenden Ansprüche, **dadurch gekennzeichnet, dass** die Schutzvorrichtung (2) eine bewegliche, insbesondere galgenartige, Haltevorrichtung (15) für die Schutzhaube (14) aufweist.

10. Sägemaschine, insbesondere Formatkreissäge, für bewegte Werkstücke mit einem rotierend angetriebenen Sägeblatt (3), einer Schwenkeinrichtung (10) und einer Hubvorrichtung für das Sägeblatt (3) sowie mit einer Steuereinrichtung (13) und einer Schutzvorrichtung (2) mit einer Schutzhaube (14) für das Sägeblatt (3), wobei die Schutzvorrichtung (2) nach mindestens einem der Ansprüche 1 bis 9 ausgebildet ist.

11. Sägemaschine nach Anspruch 10, **dadurch gekennzeichnet, dass** die Sägemaschine (1) einen Maschinentisch (5') mit einem axialen Austrittschlitz (8) für das Sägeblatt (3) und ggf. einer beweglichen Werkstückauflage (5) aufweist.

12. Sägemaschine nach Anspruch 10 oder 11, **dadurch gekennzeichnet, dass** die Sägemaschine (1) eine Bedieneinrichtung (12) mit einer Schnittstelle zur Eingabe von Durchmesser, Schwenkwinkel und Höhenlage des Sägeblatts (3) aufweist.

13. Sägemaschine nach Anspruch 10, 11 oder 12, **dadurch gekennzeichnet, dass** die Steuerung (19) der Schutzvorrichtung (2) in die Steuereinrichtung (13) implementiert ist.

14. Schutzverfahren für rotierende, heb- und senkbare sowie schwenkbare Sägeblätter (3) an einer Sägemaschine (1), insbesondere einer Formatkreissäge, für bewegte Werkstücke, wobei eine Schutzhaube (14) für das Sägeblatt (3) mittels einer Schutzvorrichtung (2) mit einer Stellvorrichtung (16) und einer Steuerung (19) relativ zum Sägeblatt (3) verstellt wird, wobei die Stellvorrichtung (16) mindestens einen steuerbaren Antrieb (17,18) für die einachsige oder mehrachsige Bewegung und Positionierung der Schutzhaube (14) relativ zum Sägeblatt (3) aufweist, **dadurch gekennzeichnet, dass** die Steuerung (19) die aktuelle Lage einer Schneidkante (4) des Sägeblatts (3) unter Berücksichtigung von Durchmesser, Schwenkwinkel und Höhenlage des Sägeblatts (3) ermittelt und auf Basis des Ergebnisses mittels der Stellvorrichtung (16) die Schutzhaube (14) relativ zum Sägeblatt (3) automatisch positioniert.

15. Schutzverfahren nach Anspruch 14, **dadurch gekennzeichnet, dass** die Schutzvorrichtung (2) eine zu einer Bedienseite (6) der Sägemaschine (1) weisende seitliche, bevorzugt flache, Haubenwand (26) der Schutzhaube (14) in einer bestimmten Entfernung zu der Schneidkante (4) des Sägeblatts (3) positioniert, welches eine zur Bedienseite (6) weisende Schwenklage einnimmt.

## Claims

1. Protective apparatus for rotating, liftable and lowerable, and pivotable saw blades (3) at a sawing machine (1), in particular a panel saw, wherein the protective apparatus (2) has a protective hood (14) for the saw blade (3) and an adjustment apparatus (16) for adjusting the protective hood (14) relative to the saw blade (3), wherein the adjustment apparatus (16) has at least one controllable drive (17, 18) for the single-axis or multiple-axis movement and positioning of the protective hood (14) relative to the saw blade (3), wherein the protective apparatus (2) has a controller (19), **characterized in that** the controller ascertains the present position of a cutting edge (4) of the saw blade (3) taking account of diameter, pivot angle and height position of the saw blade (3) and, on the basis of the result, automatically positions the protective hood (14) relative to the saw blade (3) by means of the adjustment apparatus (16).

2. Protective apparatus according to Claim 1, **characterized in that** the controller (19) ascertains the present position of the saw blade (3), in particular of the pivoted saw blade (3), in terms of its lateral projection (s) and/or in terms of its vertical projection (h).

3. Protective apparatus according to Claim 1 or 2, **characterized in that** the protective apparatus (2), in particular the adjustment apparatus (16), moves, in particular displaces, and positions the protective hood (14) laterally and transversely in relation to an axial cutting line (9) or an axial emergence slot (8) of the saw blade (3), and/or moves and positions the protective hood (14) vertically relative to the saw blade (3).

4. Protective apparatus according to one of the preceding claims, **characterized in that** the protective hood (14) has a lateral, preferably flat, hood wall (26) which faces towards an operating side (6) of the sawing machine (1), and has another, oppositely situated, flat or convex, different, lateral hood wall (27).

5. Protective apparatus according to Claim 4, **characterized in that** the protective apparatus (2), in the case of a pivoting position of the saw blade (3) that faces towards the operating side (6), positions the protective hood (14) with its one hood wall (26) at a specific lateral distance from the cutting edge (4) and/or, in the case of a vertical position of the saw blade (3) or a pivoting position thereof that faces away from the operating side (6), positions the protective hood (14) at an axial cutting line (9) or an axial emergence slot (8) of the saw blade (3).

6. Protective apparatus according to one of the preceding claims, **characterized in that** the adjustment apparatus (16) has multiple controllable drives (17, 18).

7. Protective apparatus according to one of the preceding claims, **characterized in that** the protective apparatus (2) has a detection device (21) for detecting the position of the protective hood (14) and/or for detecting diameter and/or pivot angle and/or height position of the saw blade (3).

8. Protective apparatus according to one of the preceding claims, **characterized in that** the protective hood (14) has a hood body (25) with a central hood carrier (33) and with body parts (31, 32) which are arranged in a fixed or interchangeable manner thereon and which comprise the hood walls (26, 27).

9. Protective apparatus according to one of the preceding claims, **characterized in that** the protective apparatus (2) has a movable, in particular gallows-like, holding apparatus (15) for the protective hood (14).

10. Sawing machine, in particular a panel saw, for moved workpieces, having a saw blade (3) which is driven in rotation, having a pivoting device (10) and having a lifting apparatus for the saw blade (3), and also having a control device (13) and a protective apparatus (2) with a protective hood (14) for the saw blade (3), wherein the protective apparatus (2) is designed according to at least one of Claims 1 to 9.

11. Sawing machine according to Claim 10, **characterized in that** the sawing machine (1) has a machine table (5') with an axial emergence slot (8) for the saw blade (3) and possibly with a movable workpiece support (5).

12. Sawing machine according to Claim 10 or 11, **characterized in that** the sawing machine (1) has an operating device (12) with an interface for inputting diameter, pivot angle and height position of the saw blade (3).

13. Sawing machine according to Claim 10, 11 or 12, **characterized in that** the controller (19) of the protective apparatus (2) is implemented in the control device (13).

14. Protection method for rotating, liftable and lowerable, and pivotable saw blades (3) at a sawing machine (1), in particular a panel saw, for moved workpieces, wherein a protective hood (14) for the saw blade (3) is adjusted relative to the saw blade (3) by means of a protective apparatus (2) with an adjustment apparatus (16) and with a controller (19), wherein the adjustment apparatus (16) has at least one controllable drive (17, 18) for the single-axis or multiple-axis movement and positioning of the protective hood (14) relative to the saw blade (3), **characterized in that** the controller (19) ascertains the present position of a cutting edge (4) of the saw blade (3) taking account of diameter, pivot angle and height position of the saw blade (3) and, on the basis of the result, automatically positions the protective hood (14) relative to the saw blade (3) by means of the adjustment apparatus (16).

15. Protection method according to Claim 14, **characterized in that** the protective apparatus (2) positions a lateral, preferably flat, hood wall (26) of the protective hood (14) that faces towards an operating side (6) of the sawing machine (1) at a specific distance from the cutting edge (4) of the saw blade (3), which saw blade assumes a pivoting position which faces towards the operating side (6) .

## Revendications

1. Dispositif de protection pour lames de scie (3) rotatives, pouvant être relevées et abaissées ainsi que pivotantes sur une machine de sciage (1), en particulier une scie circulaire à format, le dispositif de protection (2) présentant un capot de protection (14) pour la lame de scie (3) et un dispositif de réglage (16) servant au déplacement du capot de protection (14) par rapport à la lame de scie (3), le dispositif de réglage (16) présentant au moins un entraînement (17, 18) pouvant être commandé pour le déplacement suivant un axe ou suivant plusieurs axes et le positionnement du capot de protection (14) par rapport à la lame de scie (3), le dispositif de protection (2) présentant une commande (19), **caractérisé en ce que** la commande détermine la position réelle d'une arête de coupe (4) de la lame de scie (3) en tenant compte du diamètre, de l'angle de pivotement et de la position en hauteur de la lame de scie (3) et, sur la base du résultat, positionne automatiquement le capot de protection (14) par rapport à la lame de scie (3) au moyen du dispositif de réglage (16) .

2. Dispositif de protection selon la revendication 1, **caractérisé en ce que** la commande (19) détermine la position réelle de la lame de scie (3), en particulier de la lame de scie pivotée (3), en termes de sa portée latérale (s) et/ou en termes de sa portée verticale (h).

3. Dispositif de protection selon la revendication 1 ou 2, **caractérisé en ce que** le dispositif de protection (2), en particulier le dispositif de réglage (16), déplace, en particulier décale, et positionne le capot de protection (14) latéralement et transversalement à une ligne de coupe axiale (9) ou à une fente de sortie axiale (8) de la lame de scie (3) et/ou déplace et positionne le capot de protection (14) en hauteur par rapport à la lame de scie (3).

4. Dispositif de protection selon l'une des revendications précédentes, **caractérisé en ce que** le capot de protection (14) présente une paroi de capot (26) de préférence plate, latérale et tournée vers un côté de commande (6) de la machine de sciage (1) et une autre paroi de capot (27) latérale opposée, plate ou bombée.

5. Dispositif de protection selon la revendication 4, **caractérisé en ce que** le dispositif de protection (2), dans le cas d'une position de pivotement de la lame de scie (3) tournée vers le côté de commande (6), positionne le capot de protection (14) avec l'une de ses parois de capot (26) à une distance latérale déterminée de l'arête de coupe (4) et/ou, dans le cas d'une position verticale ou d'une position de pivotement de la lame de scie (3) opposée au côté de commande (6), positionne le capot de protection (14) au niveau d'une ligne de coupe axiale (9) ou d'une fente de sortie axiale (8) de la lame de scie (3) .

6. Dispositif de protection selon l'une des revendications précédentes, **caractérisé en ce que** le dispositif de réglage (16) présente plusieurs entraînements (17, 18) pouvant être commandés.

7. Dispositif de protection selon l'une des revendications précédentes, **caractérisé en ce que** le dispositif de protection (2) présente un dispositif de détection (21) pour la détection de la position du capot de protection (14) et/ou pour la détection du diamètre et/ou de l'angle de pivotement et/ou de la position en hauteur de la lame de scie (3).

8. Dispositif de protection selon l'une des revendications précédentes, **caractérisé en ce que** le capot de protection (14) présente un corps de capot (25) doté d'un support de capot central (33) et de parties de corps (31, 32) disposées fixement ou de manière remplaçable sur celui-ci et entourant les parois de capot (26, 27) .

9. Dispositif de protection selon l'une des revendications précédentes, **caractérisé en ce que** le dispositif de protection (2) présente un dispositif de retenue (15) mobile, en particulier de type potence, pour le capot de protection (14).

10. Machine de sciage, en particulier scie circulaire à format, pour pièces déplacées, comportant une lame de scie (3) entraînée en rotation, un dispositif de pivotement (10) et un dispositif de levage pour la lame de scie (3) et comportant un dispositif de commande (13) et un dispositif de protection (2) doté d'un capot de protection (14) pour la lame de scie (3), le dispositif de protection (2) étant réalisé selon au moins l'une des revendications 1 à 9.

11. Machine de sciage selon la revendication 10, **caractérisée en ce que** la machine de sciage (1) présente une table de machine (5') dotée d'une fente de sortie axiale (8) pour la lame de scie (3) et éventuellement d'un support de pièce mobile (5).

12. Machine de sciage selon la revendication 10 ou 11, **caractérisée en ce que** la machine de sciage (1) présente un dispositif de commande (12) doté d'une interface pour l'entrée du diamètre, de l'angle de pivotement et de la position en hauteur de la lame de scie (3).

13. Machine de sciage selon la revendication 10, 11 ou 12, **caractérisée en ce que** la commande (19) du dispositif de protection (2) est mise en œuvre dans le dispositif de commande (13).

14. Procédé de protection pour lames de scie (3) rotatives, pouvant être relevées et abaissées ainsi que pivotantes sur une machine de sciage (1), en particulier une scie circulaire à format, pour pièces déplacées, un capot de protection (14) pour la lame de scie (3) étant déplacé par rapport à la lame de scie (3) au moyen d'un dispositif de protection (2) doté d'un dispositif de réglage (16) et d'une commande (19), le dispositif de réglage (16) présentant au moins un entraînement (17, 18) pouvant être commandé pour le déplacement suivant un axe ou suivant plusieurs axes et le positionnement du capot de protection (14) par rapport à la lame de scie (3), **caractérisé en ce que** la commande (19) détermine la position réelle d'une arête de coupe (4) de la lame de scie (3) en tenant compte du diamètre, de l'angle de pivotement et de la position en hauteur de la lame de scie (3) et, sur la base du résultat, positionne automatiquement le capot de protection (14) par rapport à la lame de scie (3) au moyen du dispositif de réglage (16) .

15. Procédé de protection selon la revendication 14, **caractérisé en ce que** le dispositif de protection (2) positionne une paroi de capot (26), tournée vers un côté de commande (6) de la machine de sciage (1), latérale, de préférence plate, du capot de protection (14) à une distance déterminée de l'arête de coupe (4) de la lame de scie (3), laquelle lame de coupe adopte une position de pivotement tournée vers le côté de commande (6).
